# FASCICULE DE BREVET EUROPEEN

(11) **EP 0 387 150 B1**
(45) Date de publication et mention de la délivrance du brevet: **26.05.1993**
(21) Numéro de dépôt: 90400618.6
(22) Date de dépôt: 07.03.1990
(51) Int. Cl.: F16J 15/02, F16L 17/06

(54) **Joint d'étanchéité statique**
Statische Abdichtung
Static sealing

(30) Priorité: 07.03.1989 FR 8902980
(43) Date de publication de la demande: 12.09.1990
(73) Titulaire: PROCAL, Société anonyme dite, 52200 Langres (FR)
(72) Inventeur: Pernin, Jean-François, F-52600 Chalindrey (FR)
(74) Mandataire: Leszczynski, André

(56) Documents cités:
- GB-A- 762 232
- US-A- 2 610 870
- US-A- 3 854 737
- US-A- 4 582 330

## Description

La présente invention est relative à un joint d'étanchéité statique destiné à réaliser une étanchéité entre deux pièces fixes en appui l'une contre l'autre le long de surfaces planes, le joint étant logé dans une gorge ménagée dans l'une des surfaces.

A titre d'application particulière nullement limitative, on peut citer les pompes d'injection, le joint étant disposé de manière à réaliser l'étanchéité entre le corps et la tête de la pompe d'injection.

On utilise habituellement à cet effet des joints toriques (O-rings) qui présentent une section circulaire. Pour réaliser l'étanchéité, on met en place dans la gorge prévue à cet effet dans l'une des surfaces un tel joint qui présente un diamètre supérieur à la profondeur de la gorge et qui est déformé par écrasement lors de la mise en contact des surfaces des pièces entre lesquelles l'étanchéité doit être réalisée. Du fait de cette déformation, le joint s'ovalise et un contact d'étanchéité de surface est réalisé entre la base aplatie du joint et le fond de la gorge et entre le sommet aplati du joint et la surface supérieure appliquée sur la surface comportant la gorge.

A moins de choisir un joint de très grand diamètre, il n'existe pas de contact entre le joint et les flancs de la gorge, ou l'on obtient tout au plus des zones de contact linéaires entre le joint et les flancs de la gorge, ces zones de contact ne contribuant pas de manière efficace à l'étanchéité.

De plus, lorsque un joint de section circulaire est mis en place dans la gorge, il ne peut être positionné précisément à l'intérieur de cette dernière du fait de la possibilité de roulement sur le fond de la gorge, de telle sorte que lors de l'application mutuelle des surfaces entre lesquelles l'étanchéité doit être réalisée, la position du joint est difficilement contrôlable.

On a également déjà proposé des joints d'étanchéité statique destinés à réaliser une étanchéité entre deux pièces fixes en appui l'une contre l'autre le long de surfaces planes, le joint étant logé dans une gorge ménagée dans l'une des surfaces et présentant une section sensiblement quadrangulaire dont chacune des faces comporte un évidement sensiblement médian, de préférence de section sensiblement triangulaire ledit joint comportant une face plane inférieure destinée à s'appliquer sur le fond d'une gorge ménagée dans la surface d'une pièce, une face plane supérieure en appui de laquelle vient la surface de la pièce opposée et deux faces planes latérales dont au moins des parties à l'état comprimé du joint, viennent en contact de surface avec les flancs de la gorge (voir p.ex. GB-A-762232).

Ainsi, ce joint comporte une face plane inférieure destinée à s'appliquer sur le fond d'une gorge ménagée dans la surface d'une pièce, une face plane supérieure en appui de laquelle vient la surface de la pièce opposée et deux faces planes latérales dont au moins des parties, à l'état comprimé du joint, viennent en contact de surface avec les flancs de la gorge.

La présente invention se propose de réaliser un joint statique qui, de par la forme de sa section, permet notamment d'éviter les inconvénients des joints actuels.

L'invention a pour objet un joint à section sensiblement quadrangulaire du type précité, essentiellement caractérisé par le fait qu'il est prévu dans les faces latérales du joint, dans les parties des faces latérales se trouvant entre l'évidement et la face intérieure du joint, des languettes en saillie vers l'extérieur.

Ces languettes lorsque le joint est mis en place dans la gorge destinée à le loger, et avant la compression du joint provoquée par l'application mutuelle des surfaces entre lesquelles l'étanchéité doit être réalisée, viennent en appui contre les flancs de la gorge et contribuent au positionnement et à la retenue du joint dans la gorge évitant tout déplacement du joint dans celle-ci lors des manipulations des pièces avant leur assemblage.

Une languette similaire peut également être réalisée en saillie de l'une au moins des parties des faces latérales du joint entre l'évidement et la face supérieure de celui-ci. Cette ou ces languettes supplémentaires constituent, lorsque le joint est comprimé dans la gorge, des lèvres venant en appui contre les flancs de la gorge et fournissant un complément d'étanchéité.

Dans un mode de réalisation préféré de l'invention, la face plane supérieure présente une largeur plus faible que la face plane inférieure, les faces latérales du joint étant chacune constituées de deux parties planes, décalées latéralement, parallèles entre elles et situées de part et d'autre des évidements ménagés dans lesdites faces latérales.

Le joint selon l'invention peut être réalisé avec les mêmes matériaux que les joints toriques traditionnels, notamment en caoutchouc ou en élastomère.

Dans le but de mieux faire comprendre l'invention, on va maintenant en décrire à titre d'exemple en aucune manière limitatif un mode de réalisation en se référant au dessin annexé dans lequel :
- la figure 1 est une vue en coupe d'un joint selon l'invention,
- la figure 2 illustre le joint mis en place dans une gorge avant déformation, et
- la figure 3 est une vue analogue à la figure 2 après compression du joint en position d'utilisation.

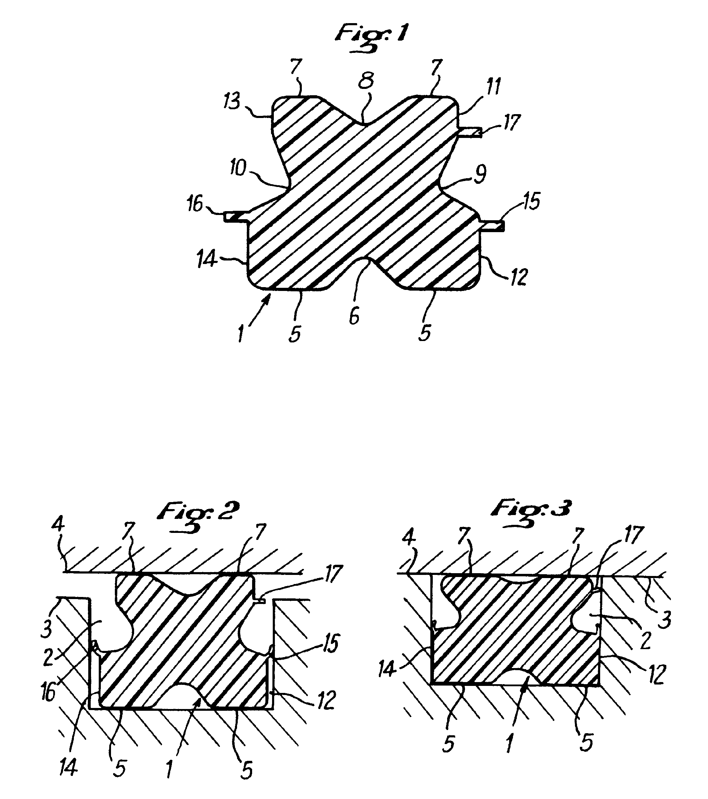

Le joint illustré désigné globalement par 1 est destiné à être logé comme on le voit dans les figures 2 et 3 dans une gorge 2 ménagée dans une surface 3 d'une pièce au contact de laquelle doit venir une surface 4 d'une autre pièce, le joint 1 étant destiné à réaliser une étanchéité entre les deux pièces lorsque les surfaces 3 et 4 sont amenées en contact mutuel.

Le joint présente une section sensiblement quadrangulaire d'aspect général en X.

Le joint comporte une face plane inférieure 5 pourvue d'un évidement médian de section sensiblement triangulaire 6 et une face supérieure 7 également pourvue d'un évidement médian de section sensiblement triangulaire 8.

Dans l'exemple illustré, la largeur de la face supérieure 7 est inférieure à celle de la face inférieure 5 de manière à favoriser la déformation du joint lors de la compression exercée par l'appui de la surface 4 dans la mesure où cet appui de compression s'effectue sur une surface plus faible.

Une bonne déformation du joint par compression est permise par les évidements 6 et 8 ainsi que par les évidements 9 et 10, également de section sensiblement triangulaire, réalisés dans les faces latérales du joint.

Dans l'exemple illustré, chacune des faces latérales est constituée de deux parties 11, 12 et respectivement 13, 14, les parties supérieures 11 et 13 étant décalées latéralement vers l'intérieur par rapport aux parties inférieures 12 et respectivement 14.

Comme on le voit le mieux sur la figure 1, à l'extrémité supérieure des parties 12 et 14, il est prévu des languettes en saillie vers l'extérieur 15 et 16 et, de la même manière, une languette 17 est prévue à la base de la partie de paroi latérale 11.

Comme on le voit le mieux sur la figure 2, les languettes 15 et 16 lorsque le joint est mis en place dans la gorge 2 viennent en contact avec les flancs latéraux de la gorge et constituent des organes de positionnement et de retenue du joint dans la gorge.

Après déformation, et comme on le voit sur la figure 3, un contact d'étanchéité de surface est réalisé au niveau du fond de la gorge par la face inférieure 5 du joint, au niveau des flancs de la gorge par les parties de paroi 12 et 14, et au niveau de la surface 4 par la face supérieure 7 du joint. On obtient ainsi une étanchéité améliorée par rapport aux joints toriques de section circulaire traditionnels.

Comme on le voit sur la figure 3, la languette 17 constitue une lèvre d'étanchéité supplémentaire.

## Revendications

1. Joint d'étanchéité statique destiné à réaliser une étanchéité entre deux pièces fixes en appui l'une contre l'autre le long de surfaces planes, le joint étant logé dans une gorge ménagée dans l'une des surfaces et présentant une section sensiblement quadrangulaire dont chacune des faces (5;7;11,12;13,14) comporte un évidement (6,8,9,10) sensiblement médian, de préférence de section sensiblement triangulaire ledit joint comportant une face plane inférieure (5) destinée à s'appliquer sur le fond d'une gorge ménagée dans la surface d'une pièce, une face plane supérieure (7) en appui de laquelle vient la surface de la pièce opposée et deux faces planes latérales (11,12;13,14) dont au moins des parties à l'état comprimé du joint, viennent en contact de surface avec les flancs de la gorge, caractérisé par le fait qu'il est prévu dans les faces latérales du joint (11,12;13,14), dans les parties (12, 14) des surfaces latérales se trouvant entre l'évidement (9, 10) et la face inférieure (5) du joint, des languettes (15, 16) en saillie vers l'extérieur.

2. Joint d'étanchéité selon la revendication 1, caractérisé par le fait qu'il comporte une languette (17) en saillie de l'une au moins des parties (11, 13) des faces latérales du joint entre les évidements (9, 10) et la face supérieure du joint (7).

3. Joint d'étanchéité selon l'une quelconque des revendications 1 et 2, caractérisé par le fait que la face plane supérieure (7) présente une largeur plus faible que la face plane inférieure (5), les faces latérales du joint étant chacune constituées de deux parties planes (11, 12 ; 13, 14) décalées latéralement, parallèles entre elles et situées de part et d'autre des évidements (9, 10) ménagés dans lesdites faces latérales.

## Patentansprüche

1. Statische Dichtung zur Abdichtung zwischen zwei Teilen, die durch gegenseitiges Abstützen längs ebener Flächen fixiert sind, wobei die Dichtung in einer an einer der Flächen ausgebildeten Vertiefung untergebracht ist und einen im wesentlichen quadratischen Querschnitt aufweist, wovon jede Seite (5; 7; 11, 12; 13, 14) eine im wesentlichen mittige Tasche (6, 8, 9, 10), bevorzugt mit im wesentlichen dreieckigem Querschnitt, aufweist, wobei die Dichtung eine ebene Unterseite (5), zur Anpassung an den Boden einer auf der Fläche des einen Teils herausgebildeten Vertiefung anzupassen, eine ebene Oberseite (7), zur Abstützung der Fläche des gegenüberliegenen Teils und zwei ebene laterale Seiten (11, 12; 13, 14) aufweist, wovon wenigstens Abschnitte im zusammengedrückten Zustand der Dichtung in Flächenkontakt mit den Seitenflächen der Vertiefung kommen, dadurch gekennzeichnet, daß in den lateralen Seiten (11, 12; 13, 14) der Dichtung, und zwar in den Abschnitten (12, 14) der lateralen Oberflächen, die sich zwischen der Tasche (9, 10) und der Unterseite (5) der Dichtung befinden, nach außen vorspringende Zungen (15, 16) vorgesehen sind.

2. Dichtung gemäß Anspruch 1, dadurch gekennzeichnet, daß sie eine Zunge (17) aufweist, die aus wenigstens einem der Abschnitte (11, 13) der lateralen Seiten der Dichtung zwischen den Taschen (9, 10) und der Oberseite (7) der Abdichtung hervorspringt.

3. Dichtung gemäß einem der Anspruch 1 oder 2, dadurch gekennzeichnet, daß die ebene Oberseite (7) eine kleinere Breite aufweist als die ebene Unterseite (5), wobei jede laterale Seite der Dichtung aus zwei ebenen Abschnitten (11, 12; 13, 14) besteht, die seitlich verschoben, parallel zu einander und beiderseits der in den lateralen Seiten herausgebildeten Taschen (9, 10) angeordnet sind.

## Claims

1. A static sealed joint intended to form a seal between two fixed components bearing against each other along flat surfaces, the joint being accommodated in a groove disposed in one of the surfaces and having a substantially quadrangular cross-section, each face of which (5; 7; 11, 12; 13,14) comprises a substantially central cut-out (6, 8, 9, 10), preferably of substantially triangular cross-section, the said joint comprising a lower flat face (5) intended for application to the base of a groove disposed in the surface of one component, an upper flat face (7) on which the surface of the opposite component is supported, and two flat side faces (11, 12; 13, 14), at least parts of which, in the compressed state of the joint, come into surface contact with the sides of the groove, characterised in that outwardly-projecting tongues (15, 16) are provided in the side faces of the joint (11, 12; 13, 14), in the parts (12, 14) of the side surfaces located between the cut-out (9, 10) and the lower face (5) of the joint.

2. A sealed joint according to claim 1, characterised in that it comprises a tongue (17) projecting from at least one part (11, 13) of the side faces of the joint between the cut-outs (9, 10) and the upper face of the joint (7).

3. A sealed joint according to either one of claims 1 or 2, characterised in that the upper flat face (7) has a width less than that of the lower flat face (5), each side face of the joint comprising two laterally offset flat parts (11, 12; 13, 14), parallel to each other and situated on both sides of the cut-outs (9, 10) disposed in the side faces.
